# EUROPÄISCHE PATENTANMELDUNG

(11) **EP 2 108 429 A1**
(43) Veröffentlichungstag der Anmeldung: **14.10.2009**
(21) Anmeldenummer: 09155907.0
(22) Anmeldetag: 23.03.2009
(51) Int. Cl.: B01D 35/30, B01D 46/00

(54) **Filterverschluss-System**

(30) Priorität: 27.03.2008 DE 202008004290 U
(71) Anmelder: MANN+HUMMEL GmbH, 71638 Ludwigsburg (DE)
(72) Erfinder: Münkel, Karlheinz, 75038 Oberderdingen (DE); Bauder, Ralf, 68775 Ketsch (DE); Brast, Raphaelle, 68804 Altlussheim (DE); Ritter, Steffen, Dr., 70327 Stuttgart (DE); Thienel, Michael, 95359 Kasendorf (DE); Schippers, Carsten, 33605 Bielefeld (DE); Petschl, Thomas, 71638 Ludwigsburg (DE)

(57) **Zusammenfassung**

Die Erfindung betrifft ein Filterverschluss-System (1) zum dichten Verbinden eines stirnseitigen Anschlussendes (2) eines Filtergehäuses (3) mit einem mit dem Anschlussende (2) korrespondierenden Anschlusskopf (4), auf den das Anschlussende (2) in einer Montagerichtung (M) aufsetzbar ist. Um eine einfach herzustellende Verbindung zu schaffen, wird vorgeschlagen, dass das Anschlussende (2) des Filtergehäuses (3) und ein korrespondierender, sich in der Montagerichtung (M) erstreckender Anschlusssteg (5) des Anschlusskopfes (4) eine Mikroverzahnung (6) aufweisen.

## Beschreibung

### Technisches Gebiet

Die Erfindung betrifft ein Filterverschluss-System der im Oberbegriff des Anspruchs 1 angegebenen Gattung. Ein solches Filterverschluss-System dient zum dichten Verbinden eines stirnseitigen Anschlussendes eines Filtergehäuses mit einem mit dem Anschlussende korrespondierenden Anschlusskopf, auf den das Anschlussende in einer Montagerichtung aufsetzbar ist. Das Filterverschluss-System dient zum Herstellen einer druckdichten und/oder gasdichten und/oder flüssigkeitsdichten Verbindung zwischen dem Filtergehäuse und dem Anschlusskopf. Die Erfindung richtet sich gleichermaßen auf Filterverschluss-Systeme, die zum einmaligen Montieren eines Filters oder Filtergehäuses vorgesehen sind, wie auch auf solche, bei denen ein Filter oder Filtergehäuse bei Wartungs- oder Instandsetzungsarbeiten regelmäßig ausgewechselt wird.

Ein bevorzugtes Anwendungsgebiet derartiger Filterverschluss-Systeme sind stationäre und fahrbare Druckluftanlagen. Die hierfür verwendeten Kompressoren benötigen Öl zum Schmieren, Abdichten und Kühlen der sich bewegenden Teile, wodurch ölhaltige Gase entstehen. Um den größten Teil dieses Öls zurückzugewinnen und die Druckluft von dem Öl zu reinigen, werden Luftentölelemente benutzt, die im Zuge der Wartung der Anlage regelmäßig auszutauschen sind. Diese Luftentölelemente sind die Filterelemente eines entsprechenden Filters und sind in einem Filtergehäuse untergebracht. Eine ähnliche Anwendung ergibt sich bei Vakuumpumpen.

Andere Anwendungen derartiger Filterverschluss-Systeme finden sich in Flüssigkeitsfiltern, die Schmutzpartikel oder andere Bestandteile aus einer Flüssigkeit herausfiltern, z.B. Ölfilter, Kraftstofffilter, Hydraulikflüssigkeitsfilter, Kühlmittelfilter, Wasserabscheider oder Prozessfilter zum Abscheiden großer Schmutzmengen aus Prozessflüssigkeiten, insbesondere bei Schleif-, Erodier- oder Funkenerodierprozessen. Filterverschluss-Systeme werden auch in Flüssigkeitsabscheidern eingesetzt, die flüssige oder feste Verunreinigungen aus einem Gasstrom abtrennen, insbesondere bei Brennkraftmaschinen, beispielsweise beim Reinigen von ölhaltigen Entlüftungsgasen aus dem Kurbelgehäuse.

In Bereichen wie der Ölfiltration und Luftentölung muss ein Filterverschluss-System insbesondere den Anforderungen hinsichtlich Druck- und Temperaturfestigkeit genügen. Wichtige Merkmal sind zumeist auch die einfache, selbsterklärende und Bedienungsfehler ausschließende Handhabbarkeit und die kostengünstige Herstellung und/oder Entsorgung.

### Stand der Technik

Im Stand der Technik haben sich vor allem Filterverschluss-Systeme etabliert, die auf Gewindeverbindungen beruhen. Dabei wird ein Filtergehäuse in der Regel mit einem zentral anordneten Gewinde, das sich in einer in das Filtergehäuse eingesetzten Endscheibe befindet, auf einen korrespondierenden Gewindestutzen des Anschlusskopfes aufgeschraubt und mittels eines Dichtmittels, beispielsweise eines O-Rings, eine Dichtung erzielt. Ferner sind auch Bajonett-Verbindungen bekannt.

Ausgehend von diesem Stand der Technik besteht die Aufgabe der Erfindung darin, ein Filterverschluss-System zu schaffen, bei dem auf einfache Weise eine dichte Verbindung hergestellt werden kann, das eine einfache, selbsterklärende und Bedienungsfehler ausschließende Handhabbarkeit ermöglicht und das in der Herstellung und/oder Entsorgung kostengünstig ist.

Diese Aufgabe wird erfindungsgemäß durch ein Filterverschluss-System mit den Merkmalen des Anspruchs 1 gelöst. Bevorzugte Ausgestaltungen und Weiterbildungen der Erfindung ergeben sich aus den abhängigen Ansprüchen und der nachfolgenden Beschreibung mit zugehörigen Zeichnungen.

### Offenbarung der Erfindung

Der erfindungsgemäße Filterverschluss-System zum dichten Verbinden eines stirnseitigen Anschlussendes eines Filtergehäuses mit einem mit dem Anschlussende korrespondierenden Anschlusskopf, auf den das Anschlussende in einer Montagerichtung aufsetzbar ist, weist die Besonderheit auf, dass das Anschlussende des Filtergehäuses und ein korrespondierender, sich in der Montagerichtung erstreckender Anschlusssteg des Anschlusskopfes eine Mikroverzahnung aufweisen, die beim Aufschieben des Anschlussendes auf den Anschlusskopf in der Montagerichtung durch einen formschlüssigen Eingriff der Mikroverzahnung das Anschlussende mit dem Anschlusskopf verbindet, wobei der Eingriff der Mikroverzahnung zwischen dem Anschlussende und dem Anschlusskopf entlang einer sich in Montagerichtung erstreckenden Flanke des Anschlussstegs und des Anschlussendes erfolgt.

Vereinfacht ausgedrückt wird vorgeschlagen, einen Filterverschluss so auszuführen, dass sich die zu verbindenden Teile über zwei Flanken verzahnen. Zusammengefügt werden die Teile durch einfaches Aufschieben in der Montagerichtung, d.h. in axialer Richtung. Hierbei gewähren sehr kleine Hinterschnitte in der Mikroverzahnung geringe Montagekräfte. Um dennoch genügend Haltekräfte realisieren zu können, können mehrere aufeinanderfolgende Reihen ausgebildet werden, so dass insgesamt eine Mikroverzahnung entsteht.

Ein erfindungsgemäßes Filterverschluss-System hat die Vorteile, dass auf eine einfache Weise eine dichte Verbindung hergestellt werden kann, wobei eine einfache, selbsterklärende und Bedienungsfehler ausschließende Handhabbarkeit ermöglicht wird. Ferner kann die Herstellung und/oder Entsorgung kostengünstig erfolgen. Weitere Vorteile der Erfindung sind die große Trag- und Haltekraft der hochfesten Verbindung, die auch mit geringen Montagekräften erzielt wird, eine schnelle Montage- und Demontagemöglichkeit, da im Gegensatz zu gebräuchlichen Aufschraubfiltern nicht mehrere Umdrehungen des Filters für das Auf- oder Abschrauben erforderlich sind, die Anwendbarkeit des Verschluss-Systems auf engstem Raum und zu niedrigen Kosten und die Realisierbarkeit für die Entsorgung verbrauchter Filter vorteilhafter metallfreier Ausführungen der Filter einschließlich Filtergehäuse, Filterelement und Verschluss. Da nämlich im Gegensatz zum Stand der Technik keine stabile stirnseitige Filterendscheibe mit einem zentralen Gewinde erforderlich ist, um den Aufschraubfilter auf einen Gewindedorn des Anschlusskopfes aufzuschrauben, kann die Filterendscheibe erheblich schwächer ausgebildet werden, also dünner und/oder in Kunststoff.

Erfindungsgemäß ist ein Filterverschluss-System zum dichten Verbinden eines stirnseitigen Anschlussendes eines Filtergehäuses mit einem mit dem Anschlussende korrespondierenden Anschlusskopf, auf den das Anschlussende in einer Montagerichtung aufsetzbar ist, wobei das Anschlussende des Filtergehäuses und ein korrespondierender, sich in der Montagerichtung erstreckender Anschlusssteg des Anschlusskopfes eine Mikroverzahnung aufweisen, die beim Aufschieben des Anschlussendes auf den Anschlusskopf in der Montagerichtung durch einen formschlüssigen Eingriff der Mikroverzahnung das Anschlussende mit dem Anschlusskopf verbindet, wobei der Eingriff der Mikroverzahnung zwischen dem Anschlussende und dem Anschlusskopf entlang einer sich in Montagerichtung erstreckenden Flanke des Anschlussstegs und des Anschlussendes erfolgt.

Das Filtergehäuse kann als Zylinder ausgebildet ist, beispielsweise als Filterbecher oder Filtertopf. Das Filtergehäuse kann als Kreiszylinder ausgebildet werden.

Der Anschlusssteg kann im Wesentlichen umlaufend ausgebildet sein, Der Anschlusssteg kann als im Wesentlichen kreisförmiger Steg ausgebildet sein.

Der Anschlusssteg kann radial innenliegend zu dem Anschlussende angeordnet sein, sodass das Anschlussende den Anschlusssteg radial von außen übergreift. Alternativ kann der Anschlusssteg radial außenliegend zu dem Anschlussende angeordnet sein, sodass der Anschlusssteg das Anschlussende radial von außen übergreift.

Die Mikroverzahnung kann als mehrreihige Rillenstruktur aus Erhebungen und damit korrespondierenden Vertiefungen ausgebildet sein, wobei die mehreren Reihen der Rillenstruktur im Wesentlichen in Montagerichtung hintereinander liegend angeordnet sind und quer zur Montagerichtung, d.h. in radialer Richtung eine Tiefenstruktur aufweisen, so dass der Eingriff der Mikroverzahnung zwischen dem Anschlussende und dem Anschlusskopf entlang einer sich in Montagerichtung erstreckenden Flanke des Anschlussstegs und des Anschlussendes über mehrere Reihen der Mikroverzahnung erfolgt.

Die Reihen der Mikroverzahnung können in der Montagerichtung im Wesentlichen den gleichen Abstand zueinander aufweisen. Die Rillenreihen der Mikroverzahnung können in der Montagerichtung exakt hintereinander liegend angeordnet sein.

Der Anschlusssteg kann sich exakt in der Montagerichtung erstrecken.

Die Rillenreihen der Mikroverzahnung können in der Montagerichtung radial versetzt zueinander angeordnet sein, vorzugsweise mit einem in der Montagerichtung zunehmenden radialen Abstand.

Der Anschlusssteg kann sich in einem Winkel zur Montagerichtung erstrecken, vorzugsweise mit einem sich entgegen der Montagerichtung abnehmenden radialen Abstand.

Die Mikroverzahnung kann radiale Erhebungen auf dem Anschlusssteg und damit korrespondierende radiale Vertiefungen in dem Anschlussende aufweisen. Die Mikroverzahnung kann radiale Erhebungen auf dem Anschlussende und damit korrespondierende radiale Vertiefungen in dem Anschlusssteg aufweisen.

Die Mikroverzahnung kann abgerundete Erhebungen und abgerundete Vertiefungen oder kantige Erhebungen und kantige Vertiefungen aufweisen. Die Mikroverzahnung kann eine Schnapphaken-, Widerhaken- oder Hinterschnitt-Geometrie aufweisen.

Die Mikroverzahnung kann in dem Anschlussende und/oder in dem Anschlusssteg entlang der Montagerichtung derart ausgebildet sein, dass ihre radiale Tiefe in kleinerem Abstand zu dem Anschlusskopf größer ist als in größerem Abstand zu dem Anschlusskopf. Die Mikroverzahnung kann mit einer in Montagerichtung gleichmäßig zunehmenden radialen Tiefe ausgebildet sein. Die radiale Tiefe der Mikroverzahnung kann dabei um mehr als 10%, 30%, 50%, 70%, 90%, 110% oder 130% zunehmen.

Die Mikroverzahnung kann im Wesentlichen in Umfangsrichtung umlaufend ausgebildet sein. Die Mikroverzahnung kann in Umfangsrichtung segmentiert und/oder unterbrochen sein.

Das Anschlussende kann an seinem dem Anschlusskopf zugewandten Ende ein oder mehrere in Montagerichtung verlaufende Schlitze aufweisen. Das Anschlussende und/oder der Anschlusssteg kann aus Weichmetall oder Kunststoff bestehen.

Das Filterverschluss-System kann ein Sicherungselement umfassen, das den durch die Mikroverzahnung gebildeten Verschluss radial außen formschlüssig übergreift und auf die Mikroverzahnung eine radial wirkende Klemmkraft ausübt, die den Eingriff der Mikroverzahnung verstärkt und/oder sichert. Das Sicherungselement kann eine in Montagerichtung verlaufende Anschrägung aufweisen, so dass sich der radiale Durchmesser des Sicherungselements entgegen der Montagerichtung verkleinert, und die mit dem Sicherungselement in Eingriff stehende Außenseite des Verschlusses, die durch das Anschlussende oder den Anschlusssteg gebildet wird, eine korrespondierende Anschrägung aufweist. Die Anschrägung kann einen Winkel zur Montagerichtung aufweisen, der mehr als 5°, 10°, 15°, 20°, 25°, 30°, 35°, 45° oder 50° beträgt. Das Sicherungselement kann als in Montagerichtung aufsteckbare Aufsteckmuffe bzw. Klemmelement ausgebildet sein. Das Sicherungselement kann selbsthemmend ausgebildet sein. Das Sicherungselement kann eine Sicherungseinrichtung zum Befestigen des Sicherungselements an dem Anschlussende und/oder an dem Anschlusskopf aufweisen. Die Sicherungseinrichtung des Sicherungselements kann ein Gewinde zum Aufschrauben oder einen Bajonettverschluss umfassen.

Erfindungsgemäß ist auch ein Filtergehäuse eines Filters mit der erfindungsgemäßen Mikroverzahnung für ein Filterverschluss-System. Erfindungsgemäß ist ebenfalls ein Filter, umfassend ein Filtergehäuse und einen Filtereinsatz in dem Filtergehäuse, der eine erfindungsgemäße Mikroverzahnung für ein Filterverschluss-System aufweist. Erfindungsgemäß ist auch eine Druckluftanlage zum Erzeugen von Druckluft mit einem Anschlusskopf mit einer erfindungsgemäßen Mikroverzahnung für ein Filterverschluss-System. Ebenfalls erfindungsgemäß ist der Einsatz in und die Gesamtheit aus einer Brennkraftmaschine mit einem Anschlusskopf mit einer erfindungsgemäßen Mikroverzahnung für ein Filterverschluss-System.

### Kurze Beschreibung der Zeichnungen

Die Erfindung wird nachfolgend anhand in den Figuren dargestellter Ausführungsbeispiele näher erläutert. Die darin beschriebenen Besonderheiten können einzeln oder in Kombination miteinander eingesetzt werden, um bevorzugte Ausgestaltungen der Erfindung zu schaffen. In den Zeichnungen zeigen:
- Fig. 1: ein geschnittenes Prinzipbild eines erfindungsgemäßen Filterverschluss-Systems,
- Fig. 2: eine Einzelheit zu Fig. 1 und
- Fig. 3: einen Schnitt durch ein Ausführungsbeispiel eines erfindungsgemäßen Filterverschluss-Systems.

### Ausführungsform(en) der Erfindung

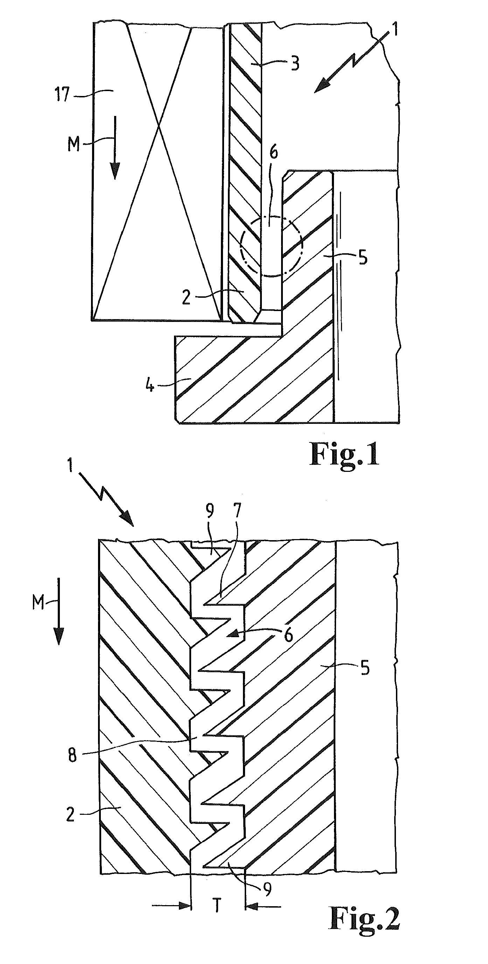

Die Figur 1 zeigt ein Prinzipbild eines erfindungsgemäßen Filterverschluss-Systems 1 zum dichten Verbinden eines stirnseitigen Anschlussendes 2 eines Filtergehäuses 3 mit einem mit dem Anschlussende 2 korrespondierenden Anschlusskopf 4, auf den das Anschlussende 2 in einer Montagerichtung M aufsetzbar ist. Sowohl das Filtergehäuse 3 mit dem Anschlussende 2 als auch der Anschlusskopf 4 sind nur ausschnittsweise dargestellt.

Das Anschlussende 2 des Filtergehäuses 3 und ein zu dem Anschlussende 2 korrespondierender, sich in der Montagerichtung M erstreckender Anschlusssteg 5 des Anschlusskopfes 4 weisen eine Mikroverzahnung 6 auf, die beim Aufschieben des Anschlussendes 2 auf den Anschlusskopf 4 bzw. den Anschlusssteg 5 in der Montagerichtung M durch einen formschlüssigen Eingriff der Mikroverzahnung 6 das Anschlussende 2 mit dem Anschlusskopf 4 bzw. dem Anschlusssteg 5 verbindet. Dabei erfolgt der Eingriff der Mikroverzahnung 6 zwischen dem Anschlussende 2 und dem Anschlusskopf 4 bzw. dem Anschlusssteg 5 entlang einer sich in Montagerichtung M erstreckenden Flanke, das heißt entlang eines Bereichs des Anschlussstegs 5 und des Anschlussendes 2. Die Dichtung des Filtergehäuses 3 gegenüber dem Anschlusskopf 4 erfolgt dabei durch ein nicht dargestelltes Dichtmittel, beispielsweise durch einen O-Ring.

Wenn sich in Figur 1 das Innere des Filtergehäuses 3 rechts von dem dargestellten Wandstück des Filtergehäuses 3 bzw. dem Anschlussende 2 befindet, beispielsweise auch die Achse eines kreiszylindrischen Filtergehäuses, ist der Anschlusssteg 5 radial innenliegend zu dem Anschlussende 2 angeordnet, so dass das Anschlussende 2 den Anschlusssteg 5 radial von außen übergreift. Diese Ausführungsform ist bevorzugt.

Wenn sich in Figur 1 das Innere des Filtergehäuses 3 links von dem dargestellten Wandstück des Filtergehäuses 3 bzw. dem Anschlussende 2 befindet, beispielsweise auch die Achse eines kreiszylindrischen Filtergehäuses, ist der Anschlusssteg 5 radial außenliegend zu dem Anschlussende 2 angeordnet, so dass der Anschlusssteg 5 das Anschlussende 2 radial von außen übergreift.

Das Anschlussende 2, das Filtergehäuse 3 oder der Anschlusssteg 5 können beispielsweise aus Weichmetall oder Kunststoff bestehen, wobei Hartkunststoffe bevorzugt sind. Wenn das Filtergehäuse 3 in Kunststoff ausgeführt ist, insbesondere bei einem metallfreien Filtereinsatz 17, ergeben sich günstige Entsorgungskosten.

Die Mikroverzahnung 6 ist in Figur 1 wegen ihrer geringen Tiefe T nicht zu erkennen, daher ist in Figur 2 ein Ausschnitt des mikroverzahnten Bereichs vergrößert dargestellt. Die radiale Tiefe T der Mikroverzahnung 6 kann je nach Anwendungsfall typischerweise zwischen 1/100 mm und 5 mm betragen, in Abhängigkeit von der gewünschten Haltekraft und den Dimensionen des Anschlussendes 2, des Filtergehäuses 3 und des Anschlusssteges 5 sowie der Elastizität der Materialen, aus denen diese Teile gefertigt sind.

Die Mikroverzahnung 6 ist vorzugsweise als mehrreihige Rillenstruktur aus Erhebungen 7 und damit korrespondierenden Vertiefungen 8 ausgebildet, wobei die mehreren Reihen der Rillenstruktur im Wesentlichen in Montagerichtung M hintereinander liegend angeordnet sind und quer zur Montagerichtung M, das heißt in radialer Richtung eine Tiefenstruktur, also ein sich in der Montagerichtung M erstreckendes Tiefenprofil aufweisen, so dass der Eingriff der Mikroverzahnung 6 zwischen dem Anschlussende 2 und dem Anschlusskopf 4 bzw. dem Anschlusssteg 5 entlang einer sich in Montagerichtung M erstreckenden Flanke des Anschlussstegs 5 und des Anschlussendes 2 über mehre Reihen der Mikroverzahnung 6 erfolgt. Die Rillenstruktur der Mikroverzahnung 6 ist vorzugsweise in einer Ebene angeordnet, die senkrecht zur Montagerichtung M orientiert ist.

Bei der in Figur 2 dargestellten Ausführungsform umfasst die Mikroverzahnung 6 radiale Erhebungen 7, das heißt Erhebungen 7, die sich quer zur Montagerichtung M, also in einer Ebene senkrecht zur Montagerichtung M erstrecken, auf dem Anschlusssteg 5 und damit korrespondierende radiale Vertiefungen 8 in dem Anschlussende 2. Alternativ oder zusätzlich kann auch vorgesehen sein, dass die Mikroverzahnung 6 radiale Erhebungen 7 auf dem Anschlussende 2 und damit korrespondierende radiale Vertiefungen 8 in dem Anschlusssteg 5 aufweist. In Figur 2 ist eine Mischform aus beiden Varianten dargestellt. Die Erhebungen 7 und Vertiefungen 8 sind bevorzugt länglich, d.h. sie verlaufen über einen Umfangsabschnitt oder den gesamten Umfang.

Vorteilhafterweise kann vorgesehen sein, dass die Rillenreihen der Mikroverzahnung 6 in der Montagerichtung M exakt hintereinander liegend angeordnet sind, wie dies in Figur 2 dargestellt ist. Dabei erstreckt sich der Anschlusssteg 5, das heißt dessen die Mikroverzahnung 6 bildende Flanke exakt in der Montagerichtung M. In anderen Ausführungsformen kann aber auch vorgesehen sein, dass die Rillenreihen der Mikroverzahnung 6 in der Montagerichtung M radial versetzt zueinander angeordnet sind, vorzugsweise mit einem in der Montagerichtung M zunehmenden Abstand. In diesem Fall wäre die Flanke zwischen dem Anschlussende 2 und dem Anschlusssteg 5, über die der Eingriff der Mikroverzahnung erfolgt, gegenüber der Montagerichtung M geneigt. Der Anschlusssteg 5 würde sich somit in einem Winkel zur Montagerichtung M erstrecken, vorzugsweise mit einem sich entgegen der Montagerichtung M abnehmenden radialen Abstand.

Die in Figur 2 dargestellte Variante einer Mikroverzahnung 6 umfasst kantige Erhebungen 7 und kantige Vertiefungen 8. Dabei kann insbesondere vorgesehen sein, dass die Mikroverzahnung 6 eine Schnapphaken-, Widerhaken- oder Hinterschnitt-Geometrie aufweist. In Figur 2 hat die Mikroverzahnung 6 Zähne 9, deren eine Flanke in bzw. entgegen der Montagerichtung M angeschrägt ist und deren andere Flanke quer zur Montagerichtung M ausgerichtet ist. Durch die Anschrägung wird das Aufschieben des Anschlussendes 2 auf den Anschlusssteg 5 erleichtert, da die Anschrägung dabei eine Querkraft erzeugt, die den Anschlusssteg 2 radial aufspreizt. Nach Überschreiten der größten Spaltbreite der Mikroverzahnung 6, wobei die Spitzen der Zähne 9 aufeinander liegen, hintergreifen sich die quer zur Montagerichtung M liegenden Flächen der Zähne 9 und bilden einen Widerhakeneffekt gegen das Zurückziehen des Anschlussendes 2 entgegen der Montagerichtung M. Die Stärke der Haltekraft kann natürlich durch unterschiedliche Orientierung, das heißt Anschrägung oder Hinterschneidung der sich gegenüberliegenden Rillenstruktur ausgebildet werden. Der Rasteffekt der Mikroverzahnung 6 ist ferner dann besonders hoch, wenn die Reihen der Mikroverzahnung 6 in der Montagerichtung M im Wesentlichen den gleichen Abstand zueinander aufweisen.

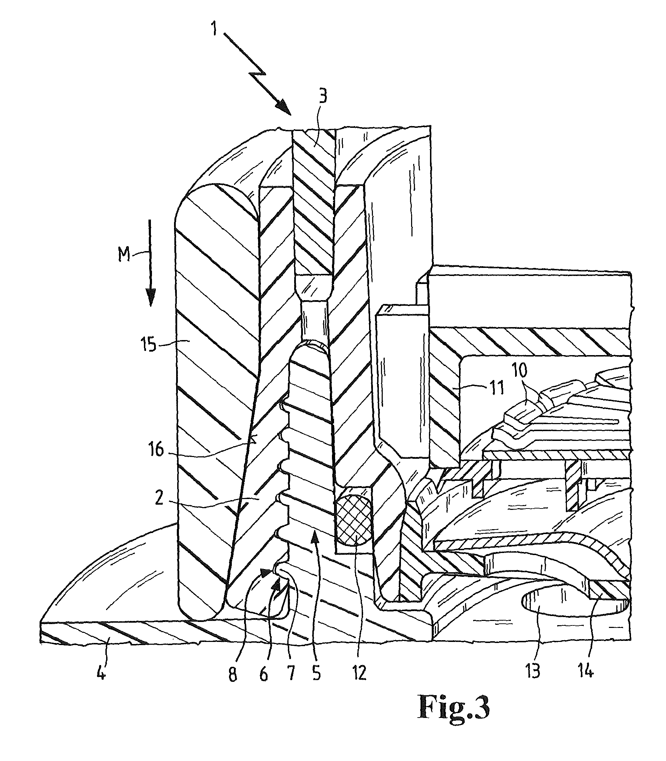

In Figur 3 ist ein Ausführungsbeispiel eines erfindungsgemäßen Filterverschluss-Systems 1, z.B. eines Ölfilters, dargestellt. Das Filtergehäuse 3 und der Anschlusskopf 4 sind in dem Schnitt nur teilweise dargestellt. Das Filtergehäuse 3 ist als Zylinder ausgebildet, beispielsweise als Filterbecher oder Filtertopf. Vorzugsweise ist das Filtergehäuse 3 als Kreiszylinder ausgebildet. Im Inneren des Filtergehäuses 3 befindet sich ein Filtereinsatz 17 (siehe hierzu Figur 1). Mittels des erfindungsgemäßen Filterverschluss-Systems 1 wird der von dem Filtergehäuse 3 und dem Filtereinsatz 17 gebildete Filter dicht mit dem Anschlusskopf 4 verbunden. Innerhalb des Filtergehäuses 3 ist ein Rückschlagventilgehäuse 11 vorgesehen, in diesem befindet sich eine Bypassventilfeder 10. Das Filterverschluss-System sorgt dabei für die mechanische Verbindung, und die Dichtung wird von einem oder mehreren O-Ringen 12 bereitgestellt. Der Fluidaustausch zwischen Anschlusskopf 4 und dem Filter erfolgt durch ein oder mehrere Öffnungen 13, die korrespondierend in dem Anschlusskopf 4 und der Filterendscheibe 14 ausgebildet sind.

Der Anschlusssteg 5 ist im Wesentlichen umlaufend ausgebildet, das heißt er bildet vorzugsweise im Wesentlichen einen kreisförmigen Steg. Das Anschlussende 2 ist als Fortsatz des stirnseitigen Endes des Filtergehäuses 3 ausgebildet und übergreift den Anschlusssteg 5 radial von der Außenseite des Filtergehäuses 3. Die zwischen der Innenseite des Anschlussendes 2 und der Außenseite 5 des Anschlussstegs gebildete Mikroverzahnung 6 weist in Abweichung von der in Figur 2 dargestellten kantigen Ausführungsform abgerundete Erhebungen 7 und abgerundete Vertiefungen 8 auf. Die Haltekraft einer solchen Mikroverzahnung 6 ist daher etwas geringer als die der in Figur 2 dargestellten.

Um bei der in Figur 3 dargestellten Ausführungsform eine feste Verbindung zwischen dem Filtergehäuse 3 und dem Anschlusskopf 4 zu erzielen, sind zwei zusätzliche Maßnahmen vorgesehen, die auch bei der in Figur 2 dargestellten Ausführungsform eingesetzt werden können.

Zum einen ist die Mikroverzahnung 6 in dem Anschlussende 3 und/oder in dem Anschlusssteg 5 entlang der Montagerichtung M derart ausgebildet, dass ihre radiale Tiefe T in kleinerem Abstand zu dem Anschusskopf 4 größer ist als in größerem Abstand zu dem Anschlusskopf 4. Dadurch nimmt die zum Aufschieben des Anschlussendes 2 auf den Anschlusssteg 5 in der Montagerichtung M erforderliche Kraft mit zunehmender Länge der sich in der Montagerichtung M erstreckenden Flanke, über die der Eingriff der Mikroverzahnung 6 erfolgt, zu. Ein solcher progressiver Verlauf der Montagekraft kann zweckmäßig sein, um das Erreichen einer definierten Position der verbundenen Teile zu gewährleisten.

Nach einem weiteren vorteilhaften Merkmal kann vorgesehen sein, dass die Mikroverzahnung 6 mit einer in Montagerichtung M gleichmäßig zunehmenden radialen Tiefe T ausgebildet ist. In vorteilhaften Ausführungsformen kann vorgesehen sein, dass die radiale Tiefe T der Mikroverzahnung 6 um mehr als 10%, 30%, 50%, 70%, 90%, 110% oder 130% zunimmt.

Als zweites Mittel zum Verbessern der mechanischen Verbindung zwischen Filtergehäuse 3 und Anschlusskopf 4 umfasst das Filterverschluss-System 1 ein Sicherungselement 15, das den durch die Mikroverzahnung 6 gebildeten Verschluss radial außen formschlüssig übergreift und auf die Mikroverzahnung 6 eine radial wirkende Klemmkraft ausübt, die den Eingriff der Mikroverzahnung 6 verstärkt und/oder sichert. Bei sehr großen Verbindungskräften kann das zusätzliche Sicherungselement 15 für die notwendige Haltekraft oder Langzeitstabilität sorgen.

Das Sicherungselement 15 wird montiert, nachdem das Anschlussende 2 mittels der Mikroverzahnung 6 auf den Anschlusssteg 5 gesteckt wurde und sorgt dafür, dass sich die durch die Mikroverzahnung 6 gebildete Verbindung nicht aufgrund der Elastizität des Anschlussendes 2 und/oder des Anschlusssteges 5 löst. Das Sicherungselement 15 ist daher vorzugsweise aus einem hochfesten, gering elastischen Material gebildet, beispielsweise aus Metall oder einem hochfesten Kunststoff.

Gemäß einer vorteilhaften Ausführungsform des Sicherungselements 15 weist es eine in Montagerichtung M verlaufende Anschrägung 16 auf, sodass sich der radiale Durchmesser des Sicherungselements 15 entgegen der Montagerichtung M verkleinert, und die mit dem Sicherungselement 15 in Eingriff stehende Außenseite des Verschlusses, die durch das Anschlussende 2 oder den Anschlusssteg 5 gebildet wird, weist eine korrespondierende Anschrägung auf. Der Winkel, den die Anschrägung 16 zur Montagerichtung M aufweist, beträgt vorteilhafterweise mehr als 5°, 10°, 15°, 20°, 25°, 30°, 35°, 45° oder 50°. über Die konische Form verhindert ein Aufbiegen der Mikroverzahnung 6 unter Höchstlast.

Das Sicherungselement 15 selbst kann in verschiedener Weise befestigt werden. In einer ersten Ausführungsform kann das Sicherungselement 15 beispielsweise als in Montagerichtung M aufsteckbare Aufsteckmuffe bzw. als Klemmelement ausgebildet sein, wie es in Figur 3 dargestellt ist. Dabei kann das Sicherungselement 15 durch einen entsprechenden Kraftschluss selbsthemmend ausgebildet sein, sodass es sich nicht selbstständig ablöst, wenn es aufgesteckt wurde. In anderen, in Figur 3 nicht dargestellten Ausführungsformen kann das Sicherungselement 15 eine Sicherungseinrichtung zum Befestigen des Sicherungselements 15 an dem Anschlussende 2 und/oder an dem Anschlusskopf 4 aufweisen, beispielsweise ein Gewinde zum Aufschrauben entsprechend einer Überwurfmutter oder einen Bajonettverschluss.

Das Filterverschluss-System 1 kann auch wieder geöffnet werden, um ein mit dem Anschlusskopf 4 verbundenes Filtergehäuse 3 abzunehmen, beispielsweise um einen Filtereinsatz 17 auszutauschen. Hierzu wird zunächst ein gegebenenfalls vorhandenes Sicherungselement 15 gelöst oder entfernt und im Anschluss daran wird das Filtergehäuse 3 mit dem Filterende 2 entgegen der Montagerichtung M abgezogen. Falls hierzu eine sehr große Kraft erforderlich sein sollte, kann das Lösen der Mikroverzahnung 6 erleichtert werden, wenn dabei das Filtergehäuse 3 leicht verkantet oder gedreht wird.

Im Regelfall wird die Mikroverzahnung 6 im Wesentlichen in Umfangsrichtung umlaufend ausgebildet sein, das heißt die Rillen der Mikroverzahnung 6 bilden im Wesentlichen vollständige Kreise. In anderen Ausführungsformen, insbesondere zum Erleichtern des Lösens des Verschlusses, kann die Mikroverzahnung 6 aber auch in Umfangsrichtung segmentiert und unterbrochen sein. In diesem Fall kann das Anschlussende 2 an seinem dem Anschlusskopf 4 zugewandten Ende auch ein oder mehrere in Montagerichtung M verlaufende Schlitze aufweisen. Solche axialen Schlitze erleichtern das Aufspreizen des Anschlussendes 2 beim Abnehmen des Filtergehäuses 3 von dem Anschlusskopf 4. Bei derartigen Varianten ist somit die Verwendung eines Sicherungselements 15 besonders vorteilhaft.

Das beschriebene Verschluss-System mit einer Mikroverzahnung 6 kann nicht nur zum dichten Verbinden von Filtern mit einem Anschlusskopf 4 dienen, sondern eignet sich prinzipiell zur Herstellung jeder Art mechanischer Verbindung, mit oder ohne Dichtungsfunktion, insbesondere wenn Teile auf engem Raum kostengünstig und hochfest miteinander verbunden werden sollen. Solche Verbindungen können beispielsweise Verbindungen von Gehäusehälften oder Rohrleitungen sein.

## Patentansprüche

1. Filterverschluss-System (1) zum dichten Verbinden eines stirnseitigen Anschlussendes (2) eines Filtergehäuses (3) mit einem mit dem Anschlussende (2) korrespondierenden Anschlusskopf (4), auf den das Anschlussende (2) in einer Montagerichtung (M) aufsetzbar ist,
**dadurch gekennzeichnet, dass**
das Anschlussende (2) des Filtergehäuses (3) und ein korrespondierender, sich in der Montagerichtung (M) erstreckender Anschlusssteg (5) des Anschlusskopfes (4) eine Mikroverzahnung (6) aufweisen, die beim Aufschieben des Anschlussendes (2) auf den Anschlusskopf (4) in der Montagerichtung (M) durch einen formschlüssigen Eingriff der Mikroverzahnung (6) das Anschlussende (2) mit dem Anschlusskopf (4) verbindet, wobei der Eingriff der Mikroverzahnung (6) zwischen dem Anschlussende (2) und dem Anschlusskopf (4) entlang einer sich in Montagerichtung (M) erstreckenden Flanke des Anschlussstegs (5) und des Anschlussendes (2) erfolgt.

2. Filterverschluss-System (1) nach einem dem vorhergehenden Anspruch, **dadurch gekennzeichnet, dass** der Anschlusssteg (5) radial innenliegend zu dem Anschlussende (2) angeordnet ist, so dass das Anschlussende (2) den Anschlusssteg (5) radial von außen übergreift oder der Anschlusssteg (5) radial außenliegend zu dem Anschlussende (2) angeordnet ist, so dass der Anschlusssteg (5) das Anschlussende (2) radial von außen übergreift.

3. Filterverschluss-System (1) nach einem der vorhergehenden Ansprüche, **dadurch gekennzeichnet, dass** die Mikroverzahnung (6) als mehrreihige Rillenstruktur aus Erhebungen (7) und damit korrespondierenden Vertiefungen (8) ausgebildet ist, wobei die mehreren Reihen der Rillenstruktur im Wesentlichen in Montagerichtung (M) hintereinander liegend angeordnet sind und quer zur Montagerichtung (M), d.h. in radialer Richtung eine Tiefenstruktur aufweisen, so dass der Eingriff der Mikroverzahnung (6) zwischen dem Anschlussende (2) und dem Anschlusskopf (4) entlang einer sich in Montagerichtung (M) erstreckenden Flanke des Anschlussstegs (5) und des Anschlussendes (2) über mehrere Reihen der Mikroverzahnung (6) erfolgt.

4. Filterverschluss-System (1) nach einem der vorhergehenden Ansprüche, **dadurch gekennzeichnet, dass** die Rillenreihen der Mikroverzahnung (6) in der Montagerichtung (M) radial versetzt zueinander angeordnet sind, vorzugsweise mit einem in der Montagerichtung (M) zunehmenden radialen Abstand.

5. Filterverschluss-System (1) nach dem vorhergehenden Anspruch, **dadurch gekennzeichnet, dass** sich der Anschlusssteg (5) in einem Winkel zur Montagerichtung (M) erstreckt, vorzugsweise mit einem sich entgegen der Montagerichtung (M) abnehmenden radialen Abstand.

6. Filterverschluss-System (1) nach einem der vorhergehenden Ansprüche, **dadurch gekennzeichnet, dass** die Mikroverzahnung (6) radiale Erhebungen (7) auf dem Anschlusssteg (5) und damit korrespondierende radiale Vertiefungen (8) in dem Anschlussende (2) aufweist; oder die Mikroverzahnung (6) radiale Erhebungen (7) auf dem Anschlussende (2) und damit korrespondierende radiale Vertiefungen (8) in dem Anschlusssteg (5) aufweist.

7. Filterverschluss-System (1) nach einem der vorhergehenden Ansprüche, **dadurch gekennzeichnet, dass** die Mikroverzahnung (6) abgerundete Erhebungen (7) und abgerundete Vertiefungen (8) aufweist und/oder die Mikroverzahnung (6) kantige Erhebungen (7) und kantige Vertiefungen (8) aufweist und/oder die Mikroverzahnung (6) eine Schnapphaken-, Widerhaken- oder Hinterschnitt-Geometrie aufweist.

8. Filterverschluss-System (1) nach einem der vorhergehenden Ansprüche, **dadurch gekennzeichnet, dass** die Mikroverzahnung (6) in dem Anschlussende (2) und/oder in dem Anschlusssteg (5) entlang der Montagerichtung (M) derart ausgebildet ist, dass ihre radiale Tiefe (T) in kleinerem Abstand zu dem Anschlusskopf (4) größer ist als in größerem Abstand zu dem Anschlusskopf (4), wobei die Mikroverzahnung (6) insbesondere mit einer in Montagerichtung (M) gleichmäßig zunehmenden radialen Tiefe (T) ausgebildet ist, insbesondere die radiale Tiefe (T) der Mikroverzahnung (6) um mehr als 10%, 30%, 50%, 70%, 90%, 110% oder 130% zunimmt.

9. Filterverschluss-System (1) nach einem der vorhergehenden Ansprüche, **dadurch gekennzeichnet, dass** die Mikroverzahnung (6) im Wesentlichen in Umfangsrichtung umlaufend ausgebildet ist und/oder in Umfangsrichtung segmentiert und/oder unterbrochen ist.

10. Filterverschluss-System (1) nach dem vorhergehenden Anspruch, **dadurch gekennzeichnet, dass** das Anschlussende (2) an seinem dem Anschlusskopf (4) zugewandten Ende ein oder mehrere in Montagerichtung (M) verlaufende Schlitze aufweist.

11. Filterverschluss-System (1) nach einem der vorhergehenden Ansprüche, **dadurch gekennzeichnet, dass** es ein Sicherungselement (15) umfasst, das den durch die Mikroverzahnung (6) gebildeten Verschluss radial außen formschlüssig übergreift und auf die Mikroverzahnung (6) eine radial wirkende Klemmkraft ausübt, die den Eingriff der Mikroverzahnung (6) verstärkt und/oder sichert.

12. Filterverschluss-System (1) nach dem vorhergehenden Anspruch, **dadurch gekennzeichnet, dass** das Sicherungselement (15) eine in Montagerichtung (M) verlaufende Anschrägung (16) aufweist, so dass sich der radiale Durchmesser des Sicherungselements (15) entgegen der Montagerichtung (M) verkleinert, und die mit dem Sicherungselement (15) in Eingriff stehende Außenseite des Verschlusses, die durch das Anschlussende (2) oder den Anschlusssteg (5) gebildet wird, eine korrespondierende Anschrägung (16) aufweist, wobei die Anschrägung insbesondere (16) einen Winkel zur Montagerichtung (M) aufweist, der mehr als 5°, 10°, 15°, 20°, 25°, 30°, 35°, 45° oder 50° beträgt.

13. Filterverschluss-System (1) nach einem Ansprüche 11 bis 12, **dadurch gekennzeichnet, dass** das Sicherungselement (15) als in Montagerichtung (M) aufsteckbare Aufsteckmuffe bzw. Klemmelement ausgebildet ist.

14. Filterverschluss-System (1) nach einem Ansprüche 11bis 13, **dadurch gekennzeichnet, dass** das Sicherungselement (15) eine Sicherungseinrichtung zum Befestigen des Sicherungselements (15) an dem Anschlussende (2) und/oder an dem Anschlusskopf (4) aufweist, insbesondere ein Gewinde zum Aufschrauben oder einen Bajonettverschluss und/oder das Sicherungselement (15) selbsthemmend ausgebildet ist.

15. Filter insbesondere für eine Brennkraftmaschine oder eine Druckerzeugungsanlage, umfassend ein Filtergehäuse (3) und einen Filtereinsatz (17) in dem Filtergehäuse, **dadurch gekennzeichnet, dass** er eine Mikroverzahnung (6) für ein Filterverschluss-System (1) nach einem der vorhergehenden Ansprüche aufweist.
